Europäisches Patentamt

European Patent Office

Office européen des brevets

(19)

(11) Numéro de publication: **0 006 378**
**A1**

(12) **DEMANDE DE BREVET EUROPEEN**

(21) Numéro de dépôt: 79400368.1

(22) Date de dépôt: 07.06.79

(51) Int. Cl.³: **B 65 G 7/12**

(30) Priorité: 15.06.78 FR 7818493

(71) Demandeur: **Morgante, Georges, 10 Avenue Des Ecoles, F-06110 Rocheville (FR)**

(43) Date de publication de la demande: 09.01.80
**Bulletin 80/1**

(72) Inventeur: **Morgante, Georges, 10 Avenue Des Ecoles, F-06110 Rocheville (FR)**

(84) Etats contractants désignés: **BE DE GB IT**

(54) **Brancard pliant de transport de marchandises.**

(57) Brancard permettant le transport de charges lourdes dans les endroits inaccessibles par des engins de manutentions a roues, escaliers dallages de jardins, entrée etroite.

Composer de quatre poignées I, de quatre montants 7 et 8 et de cinq traverses 4/5/6, servant de renfort avec des charnieres 3 permettant le degagement du coté pour la mise en place de la charge, et d'une protection 12 sur caque poignée évitant les blaissures aux mains, contre les murs.

Le brancard peut servir au transport des machines electro menager, machine outils, coffre forts, caisses, cartons de demanagement, meubles, television.

DESCRIPTIF 1

**Brancard de transport**

**La** présente invention concerne les brancards de transport de marchandises.
**L'**invention a l' avantage de se plier fig: 5 et de prendre peu de place à
l'interieur des vehicules, et d' un poids relativement faible, permettant
un deplacement aisé. Les démenageurs et les livreurs se servent beaucoups
de cordage, de lanieres coupant les mains apres quelques minutes d'utilisation. La presente invention à l' avantage d'être d'une manipulation facile,
et d' une mise en place des colis sur le brancard rapide pour le transport
**fig: 5**

En position repos. fig: 6 : deplier pour la mise en place des colis fig:7
**La** charge est en place pour le transport, le livreur se trouvant du coté C
doit tourner le dos à la charge pour monter les marches ou face a ceeles ci
**pour** descedre. Le deuxiemes brancardiers B doit lever lentement la char e par
les deux poignées I, pour que C ai les bras tendus et tiennent fortement les
**deux** poignées I, à ce moment là la charge se trouve bloquée par son poids
les renforts 4 / 5 / 6 / les montants 7 / 8, le relevage peut se faire pour
le deplacement, sans attacher le colis, celui ci ne pouvant pas basculer .

Quatre planches de dessins expliquent le fonctionnement et les pièces qui
forment le brancard P L I - 2 dessins au I/IO   P L 3 - 4  au I/2

La presnete invention comprte plusieurs élements.
**Quatre** poignees fixes fig: 2 plier directement sur les montants 7 / 8, mais
**plus** encombrante que les pliables fig/ 8, composer d'un tube coupé en biais
**fig:** IO comme les montants 7 /8 la piece fig: II / I2 percée d'un trou I6
soudée sur I fig : 8 servant de charnieres pour eviter le glissement de la
**piece** I sur 7 ou 8 une rondelle I8 soudée sur I avec un rivet soudé sur I8
**la** rondelle pércée I9 souée dur 7 / 8 servant de butée au rivet I7 .

Une protection I2 fig: I3 / I4 soudée sur fig: I fig: I9 évite les coups aux
aux mains contre les murs dans les passages étroits. La poignée I soudée à
I3 fixer sur 7 / 8 par un boulon I4 et un écrou I5 .

Les montants 7 et 8 renforcer par deux traversses 4 / 5 soudés aux deux
extremitées fig: I rendant rigide le brancard.

Les deux charnieres 3 permettant le pliage , la piece 3 fig: I8 / I9
soudée sur les montants 8 pércée d'un trou I6 . Entre les deux pieces 3
une traversse 5 fig: I6 soudée sur 3 fig: I . L'ensemble traversser par
une tige filetée 20 serrée par un écrou I5 .

Les montants 7 arrondis aux extremitées fig: I7 evitent de dratter contre
les colis lors du chargement .

Les montants 7 /8 , les renforts 4 / 5 / 6 / sont recouverts par du
caoutchou pour eviter les rayures contre les colis .

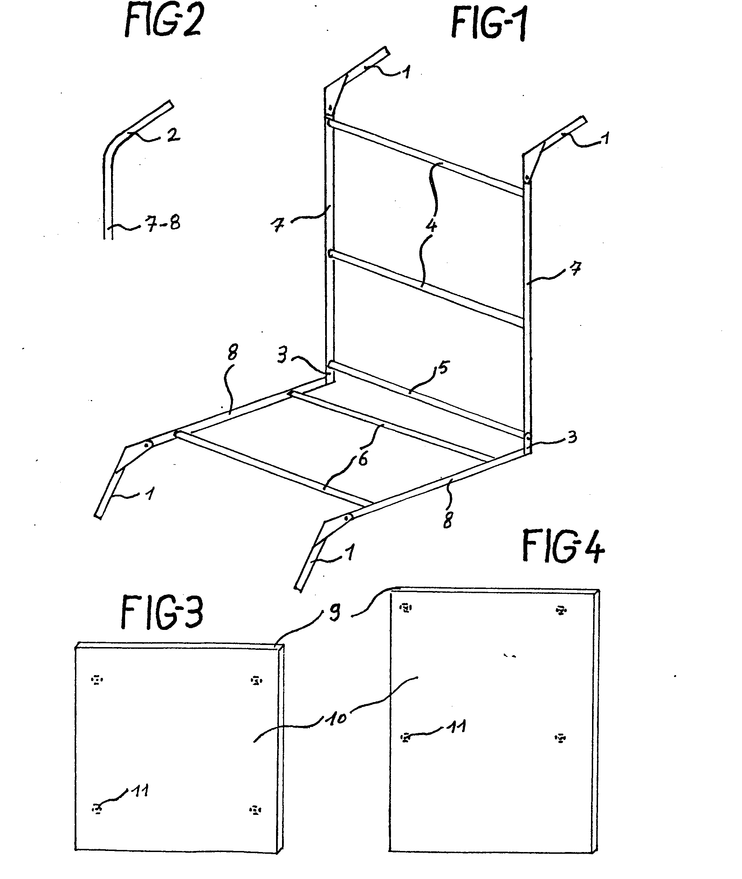

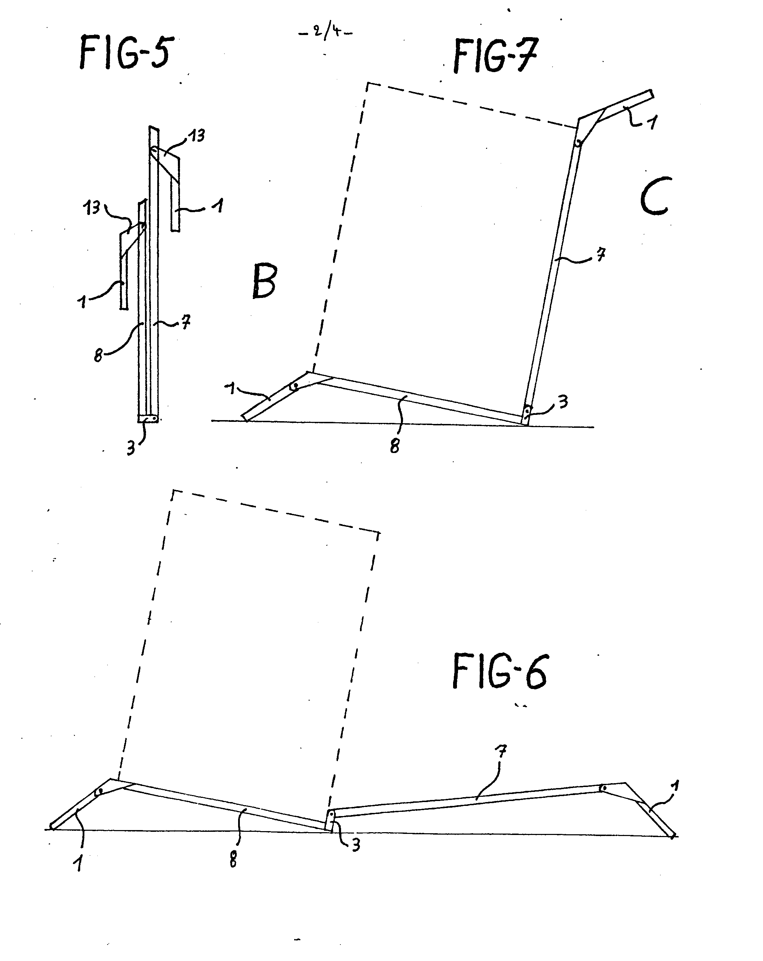

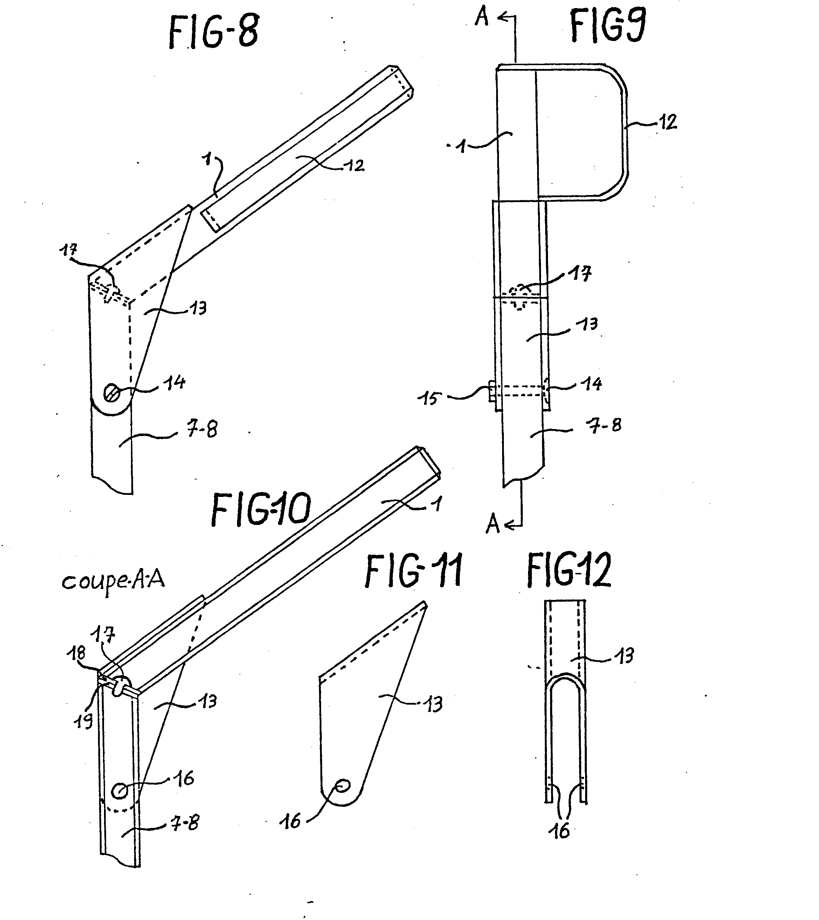

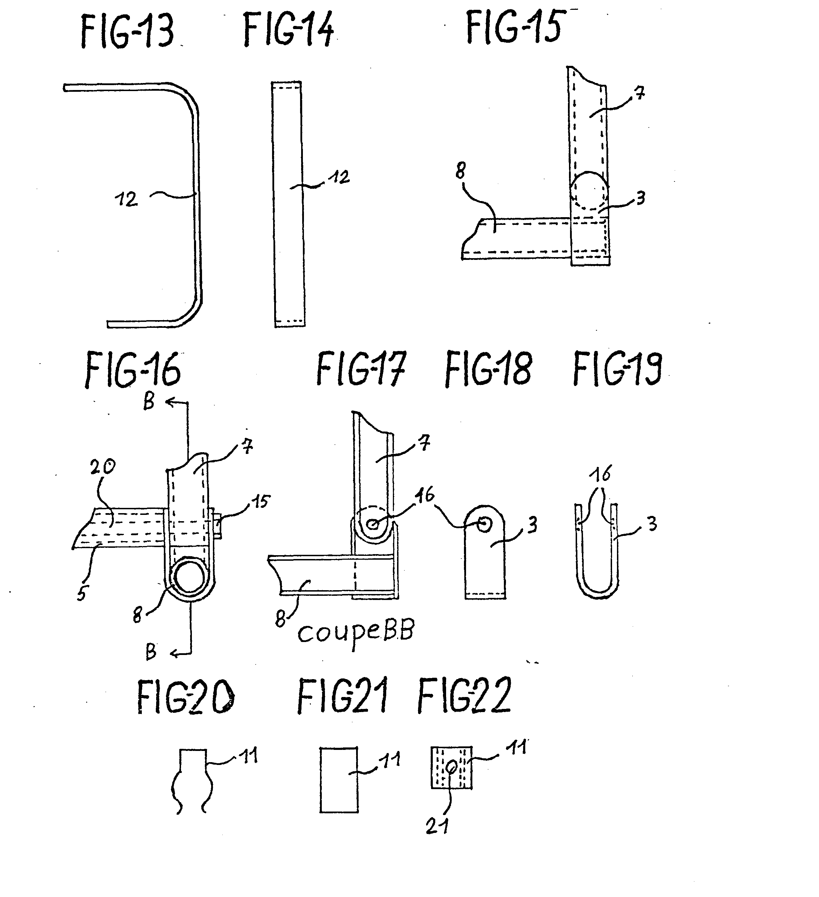

La figure 3 / 4 sont deux contre-plaqués recouverte de moquette souple
fixée sur le brancard par quatre clips II fig: 20 / 2I / 22 pour une
mise en place rapide servant à éviter les marques contre les pieces
fragiles , television , meubles vernis . Les brancards utilisant cette
protection en permanance et plier l' ensemble pour le rangement la piece
3 sera plus grande pour un ecart suffisant entre 7 et 8 au repos fig:5 .

L' invention decrite ci dessus à été réalisér avec du tube I5/2I dit de
plomberie, mais d' autre peuvent etres utilisés, diametre plus petit,
plus grands, tube fer ordinaire, galvanisé, en alumunuim, duralumun et
dérivés, tube carré,rectangulaire .

La fabrication peut etre etendue a plusieurs matieres, mais le systeme
de transport reste le meme./

Les montants 7 / 8 peuvent etres plus petits pour les livreurs de
televisions ou plus grandes pour les machines à laver industrielles, la
largeur peut varier pour un brancard plus solide permettant à quatre
personnes de faire le transport .

La presente invention peut etre utilisée pour monter , descendre des
marches dans des terrins vagues, des entrées etroites .

Permettant le transport des appareils électro menager, coffre fort,
caisses, cartons, malles de demenagements, meubles, television , machineoutils .

REVENDICATION

1 Brancard pliant de transport de marchandises du type comportant des poignées, montants, charnieres, traversses.

Caracterisé par le fait que les montants et les traversses maintiennent la charge, que les charnieres sont fixées en bas des montants et que les poignées sont pliantes .

2 Brancard pliant de transport de marchandises.

Dispositif selon la revendication 1

Caracterisé par le fait que les montants inclinés ce qui permet l' adaptation d'une poignée.

Brancard pliant de transport de marchandises.

3 Dispositif selon la revendication 1 et 2

caracterisé par le fait que la poignée peut etre soit cintrée, soit articulée en bout des montants.

Brancard pliant de transport de marchandises

4 Dispositif suivant la revendication 3

Caracterisé par le fait que la poignée prend appuie sur une surface percée au travers de laquelle est fixer un rivet jouant le role de butoir , ce qui evite à la poignée de se coincér par forte charge.

Brancard pliant de transport de marchandises

5 Dispositif selon la revendication 1

Caracterisé par le fait que les montants et les traversses servzat quelque soit la position d' appuit aux charges.

Brancard pliant de transport de marchandises.

6 Dispositif selon la revendication 1

Caracterisé par le fait que les charnieres permettent l' ouvertures et la fermeture des montants ce qui facilitent les manoeuvres de mise en place

Brancard pliant de transport de marchandises.

7 Dispositif selon la revendication 1 et 3

caracterisé par le fait que les poignées comportent sur la partie exterieurs un élément de protection qui assure une sécurité lors de la manipulation.

FIG2

FIG-1

FIG-3

FIG4

FIG-5

FIG-7

FIG-6

FIG-8

FIG9

FIG-10

coupe A·A

FIG-11

FIG-12

FIG-13    FIG-14    FIG-15

FIG-16    FIG-17    FIG-18    FIG-19

coupe B.B

FIG20    FIG21    FIG22

**Office européen des brevets** · **RAPPORT DE RECHERCHE EUROPEENNE**

Numéro de la demande

EP 79 40 0368

## DOCUMENTS CONSIDERES COMME PERTINENTS

| Catégorie | Citation du document avec Indication, en cas de besoin, des parties pertinentes | Revendication concernée |
|---|---|---|
| | DE - C - 103 426 (E. TROOST) <br> * Ensemble du brevet * <br><br> -- <br><br> US - A - 2 400 155 (J.P. LETSCHERT) <br> * Page 1, colonne 2, ligne 3 à page 2, colonne 1, ligne 71; figures * <br><br> -- | 1 <br><br><br><br> 1 |
| A | FR - A - 2 160 339 (RUOCCO.J.) <br> * Revendications 1-5; figures * <br><br> -- | 1 |
| A | US - A - 2 367 889 (F.G. RADTKE) <br> * Page 1, colonne 2, ligne 4 à page 2, colonne 1, ligne 27; figures * <br><br> ---- | 1 |

**CLASSEMENT DE LA DEMANDE (Int. Cl.²)**

B 65 G 7/12

**DOMAINES TECHNIQUES RECHERCHES (Int. Cl.²)**

B 65 G
A 61 G
A 47 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 05-09-1979 | VAN ROLLEGHEM |

OEB Form 1503.1  06.78